# EUROPÄISCHE PATENTSCHRIFT

(11) **EP 3 569 378 B1**
(45) Veröffentlichungstag und Bekanntmachung des Hinweises auf die Patenterteilung: **18.08.2021**
(21) Anmeldenummer: 19174425.9
(22) Anmeldetag: 14.05.2019
(51) Int. Cl.: B29C 45/00, B05D 1/30, B05D 7/02, B05D 7/00, B29C 45/16, B29C 33/00, B29C 45/37, B29L 31/30

(54) **KUNSTSTOFFBAUTEIL UND VERFAHREN ZUR HERSTELLUNG DES KUNSTSTOFFBAUTEILS**
PLASTIC COMPONENT AND METHOD FOR PRODUCING THE PLASTIC COMPONENT
COMPOSANT EN MATIÈRE PLASTIQUE ET PROCÉDÉ DE FABRICATION D'UN COMPOSANT EN MATIÈRE PLASTIQUE

(30) Priorität: 14.05.2018 DE 102018111392
(43) Veröffentlichungstag der Anmeldung: 20.11.2019
(73) Patentinhaber: Werkzeugbau Siegfried Hofmann GmbH, 96215 Lichtenfels (DE)
(72) Erfinder: Popp, Andreas, 91257 Pegnitz (DE); Dinkel, Stefanie, 96215 Lichtenfels (DE)
(74) Vertreter: Hafner & Kohl PartmbB

(56) Entgegenhaltungen:
- EP-A1- 0 845 344
- EP-A2- 1 705 152
- DE-A1-102006 010 310
- DE-A1-102007 062 465
- DE-T2- 69 934 511
- US-A1- 2010 112 317

## Beschreibung

Die Erfindung betrifft ein Verfahren zur Herstellung eines Kunststoffbauteils, welches ein Trägerelement und mehrere darauf angeordnete oder ausgebildete Kunststoffmaterialschichten umfasst.

Entsprechende Verfahren zur Herstellung von Kunststoffbauteilen, welche ein Trägerelement und mehrere darauf angeordnete oder ausgebildete Kunststoffmaterialschichten umfassen, sind aus dem Stand der Technik in einer Vielzahl an unterschiedlichen Ausführungsformen bekannt. Entsprechende Verfahren werden beispielsweise im Bereich der Kraftfahrzeugproduktionstechnik zur Herstellung von Kraftfahrzeugbauteilen eingesetzt.

Es besteht ein stetiger Weiterentwicklungsbedarf entsprechender Verfahren im Hinblick auf fertigungsbezogene sowie bauteilbezogene Aspekte. Dabei sollen im Allgemeinen die strukturellen Eigenschaften der mit entsprechenden Verfahren herstellbaren Kunststoffbauteile auf fertigungstechnisch effiziente Weise verbessert werden. Im Besonderen sollen u.a. die Oberflächeneigenschaften der mit entsprechenden Verfahren herstellbaren Kunststoffbauteile auf fertigungstechnisch effiziente Weise verbessert werden.

Ferner besteht ein Bedarf, die optischen Eigenschaften, d. h. insbesondere die Transluzenz bzw. Transparenz sowie die optische Anmutung, der mit entsprechenden Verfahren herstellbaren Kunststoffbauteile auf fertigungstechnisch effiziente Weise zu verbessern.

EP 0 845 344 A1 offenbart ein Verfahren zur Herstellung eines mehrschichtigen Kunststoffbauteils, welches im Bereich einer Oberfläche mit gegenüber der Oberfläche erhabenen Elementen versehen ist.

EP 1 705 152 A1 offenbart ein Verfahren zur Herstellung eines Bauteils mit Mikro- oder Nanostruktur mit den Schritten Herstellen eines Substrates durch einen Spritzgieß- oder Spritzprägeprozess, wobei auf einer Oberfläche des Substrats eine Mikro- oder Nanostruktur aufgebracht wird, und Überfluten des Substrats mit einem vernetzenden, aushärtenden Material.

Der Erfindung liegt die Aufgabe zugrunde, ein, insbesondere im Hinblick auf die Möglichkeit einer fertigungstechnisch effizienten Herstellung von Kunststoffbauteilen mit verbesserten strukturellen und/oder optischen Eigenschaften, verbessertes Verfahren zur Herstellung eines Kunststoffbauteils anzugeben.

Die Aufgabe wird durch ein Verfahren zur Herstellung eines Kunststoffbauteils gemäß Anspruch 1 gelöst. Die hierzu abhängigen Ansprüche betreffen mögliche Ausführungsformen des Verfahrens.

Das hierin beschriebene Verfahren dient im Allgemeinen zur Herstellung eines Kunststoffbauteils. Ein vermittels des Verfahrens herstellbares Kunststoffbauteil umfasst ein Trägerelement und mehrere darauf, d. h. auf einer Fläche bzw. Oberfläche des Trägerelements, angeordnete oder ausgebildete Kunststoffmaterialschichten. Das Kunststoffbauteil weist sonach einen mehrlagigen bzw. -schichtigen Aufbau, bestehend aus dem Trägerelement und den darauf angeordnet oder ausgebildeten Kunststoffmaterialschichten, auf. Wie sich im Weiteren ergibt, handelt es sich bei entsprechenden Kunststoffmaterialschichten insbesondere um Kunststofflackschichten, d. h. um Schichten aus einem lackartigen bzw. -förmigen Kunststoffmaterial bzw. einem Ku nststofflack.

Bei einem verfahrensgemäß herstellbaren bzw. herzustellenden Kunststoffbauteil kann es sich z. B. um ein an oder in einem Kraftfahrzeug zu verbauendes Kunststoffbauteil handeln. Andere Anwendungs- bzw. Einsatzgebiete sind jedoch denkbar.

Das Verfahren umfasst wenigstens die im Folgenden näher beschriebenen Schritte:
In einem ersten Schritt des Verfahrens erfolgt ein Ausbilden des Trägerelements des herzustellenden Kunststoffbauteils aus einem Kunststoffmaterial. Ein entsprechendes Trägerelement kann eine Trägerstruktur des herzustellenden Kunststoffbauteils bilden. Das Trägerelement kann durch ein einen Teilprozess des hierin beschriebenen Verfahrens bildenden Kunststoffverarbeitungsprozess ausgebildet werden. Ein besonderes Beispiel eines entsprechenden Kunststoffverarbeitungsprozesses ist ein Spritzgießprozess. Das Trägerelement kann sonach im Rahmen eines Spritzgießprozesses, d. h. durch Spritzgießen eines spritzgießfähigen Kunststoffmaterials, ausgebildet werden. Das Trägerelement kann sonach aus einem spritzgießfähigen duro- oder thermoplastischen Kunststoffmaterial ausgebildet werden. Der Begriff "Kunststoffmaterial" beinhaltet auch Gemische chemisch und/oder physikalisch unterschiedlicher Kunststoffmaterialien.

Im Rahmen des Kunststoffverarbeitungsprozesses, d. h. insbesondere des Spritzgießprozesses, zum Ausbilden des Trägerelements können an dem Trägerelement bestimmte fertigungstechnisch und/oder bauteiltechnisch relevante Funktionselemente, d. h. z. B. ein oder mehrere Angusskanäle für die im Rahmen des Verfahrens im Weiteren zu verarbeitenden flutbaren Kunststoffmaterialien, und/oder ein oder mehrere Befestigungselemente, z. B. in Form von Formschlusselementen, wie z. B. Rastelementen, für die Befestigung des Kunststoffbauteils an einem Drittgegenstand, etc., ausgebildet werden. Bei einem entsprechenden Funktionselement kann es sich auch um eine weiter unten näher beschriebene Dichtungsstruktur, welche wenigstens die mit dem ersten flutbaren Kunststoffmaterial zu flutende Fläche bzw. Oberfläche des Trägerelements begrenzend umgibt, handeln.

Das Trägerelement wird typischerweise mit einer flächigen Geometrie ausgebildet. Die flächige Geometrie eines entsprechend ausgebildeten Trägerelements zeichnet sich typischerweise durch wenigstens eine zumindest abschnittsweise, gegebenenfalls vollständig, ebene Fläche bzw. Oberfläche des Trägerelements aus. Ein entsprechend flächig ausgebildetes Trägerelement weist sonach typischerweise eine eine Oberseite des Trägerelements bildende Fläche bzw. Oberfläche und eine eine Unterseite des Trägerelements bildende Fläche bzw. Oberfläche auf.

Alternativ zu dem vorstehend beschriebenen Ausbilden des Trägerelements kann in dem ersten Schritt des Verfahrens auch ein entsprechendes bereits fertig gestelltes, d. h. in einem zu dem hierin beschriebenen Verfahren gesonderten Verfahren hergestelltes, Trägerelement bereitgestellt werden.

In allen Fällen liegt nach dem ersten Schritt des Verfahrens ein entsprechendes, gegebenenfalls mit wenigstens einem Funktionselement, d. h. insbesondere einer die mit dem ersten flutbaren Kunststoffmaterial zu flutende Fläche bzw. Oberfläche des Trägerelements begrenzend umgebenden Dichtungsstruktur, ausgebildetes, Trägerelement vor.

In einem auf den ersten Schritt folgenden zweiten Schritt des Verfahrens erfolgt ein Ausbilden einer eine, insbesondere ebene, freiliegende Fläche bzw. Oberfläche des Trägerelements zumindest abschnittsweise, gegebenenfalls vollständig, bedeckenden ersten Kunststoffmaterialschicht durch zumindest abschnittsweises Fluten der freiliegenden Fläche bzw. Oberfläche des Trägerelements mit einem ersten flutbaren bzw. flutfähigen Kunststoffmaterial. In dem zweiten Schritt des Verfahrens wird wenigstens eine freiliegende, insbesondere ebene, Fläche bzw. Oberfläche des Trägerelements sonach mit einem ersten flutbaren Kunststoffmaterial unter Ausbildung einer ersten Kunststoffmaterialschicht überflutet. Die wenigstens eine freiliegende Fläche bzw. Oberfläche des Trägerelements wird sonach durch Überfluten mit einem ersten flutbaren Kunststoffmaterial unter Ausbildung einer ersten Kunststoffmaterialschicht bedeckt.

Grundsätzlich ist es im Zusammenhang mit der Ausbildung der ersten Kunststoffmaterialschicht auch denkbar, in dem zweiten Schritt des Verfahrens mehrere gesonderte freiliegende, insbesondere ebene, Teilflächen bzw. Teiloberflächen des Trägerelements jeweils mit einem flutbaren Kunststoffmaterial unter Ausbildung mehrerer zusammenhängender oder nicht zusammenhängender Kunststoffmaterialschichtbereiche zu überfluten. Die erste Kunststoffmaterialschicht kann sonach in einer Ebene mehrere zusammenhängende oder nicht zusammenhängende Kunststoffmaterialschichtbereiche umfassen.

Der Flutungsvorgang des ersten flutbaren Kunststoffmaterials kann durch Anlegen eines Unterdrucks bzw. eines Vakuums bedingt oder begünstigt werden. Das Anlegen eines Unterdrucks bzw. eines Vakuums kann insbesondere dann zweckmäßig sein, wenn auf der freiliegenden Fläche des Trägerelements ausgebildete Oberflächenelemente bzw. Oberflächenstrukturen umflutet werden sollen. Das Anlegen eines Unterdrucks bzw. eines Vakuums kann hier insbesondere einer unerwünschten Ausbildung von Gasblasen entgegenwirken.

Das erste flutbare Kunststoffmaterial zeichnet sich insbesondere durch seine ausgesprochen fließfähigen Eigenschaften sowie ein gewisses Reaktionsvermögen, d. h. ein gewisses Aushärte- bzw. Verfestigungsvermögen, aus. Das erste flutbare Kunststoffmaterial lässt sich sonach aushärten bzw. verfestigen, wobei im Rahmen eines entsprechenden Aushärte- bzw. Verfestigungsvorgangs eine feste, gegebenenfalls stoffschlüssige, Verbindung des ersten flutbaren Kunststoffmaterials mit dem Trägerelement bzw. dem überfluteten Bereich des Trägerelements ausgebildet wird. Die in dem zweiten Schritt ausbildbare bzw. ausgebildete erste Kunststoffmaterialschicht ist sonach typischerweise fest, bei entsprechender chemischer Verträglichkeit gegebenenfalls sogar stoffschlüssig, mit dem darunterliegenden Trägerelement verbunden.

Der zweite Schritt des Verfahrens schließt sich zeitlich typischerweise unmittelbar an den ersten Schritt des Verfahrens an. Insbesondere erfolgt der zweite Schritt des Verfahrens typischerweise unmittelbar nach dem Ausbilden des Trägerelements. Für die beschriebene Variante des Ausbildens des Trägerelements in einem Spritzgießprozess gilt, dass sich das Fluten des Trägerelements mit dem ersten flutbaren Kunststoffmaterial unmittelbar an das Spritzgießen des Trägerelements anschließen kann. Das erste flutbare Kunststoffmaterial kann prinzipiell nach dem Ausbilden des Trägerelements unmittelbar in die Kavität des Spritzgießwerkzeugs eingebracht werden, typischerweise ist jedoch ein Umsetzen des Trägerelements in eine größere Kavität erforderlich.

Nach dem zweiten Schritt des Verfahrens liegt sonach ein Trägerelement vor, welches zumindest abschnittsweise mit einer ersten Kunststoffmaterialschicht bedeckt ist.

In einem auf den zweiten Schritt folgenden dritten Schritt des Verfahrens erfolgt ein Ausbilden einer eine, insbesondere ebene, freiliegende Fläche bzw. Oberfläche der ersten Kunststoffmaterialschicht zumindest abschnittsweise, gegebenenfalls vollständig, bedeckenden zweiten Kunststoffmaterialschicht durch zumindest abschnittsweises Fluten der freiliegenden Fläche bzw. Oberfläche der ersten Kunststoffmaterialschicht mit einem zweiten flutbaren bzw. flutfähigen Kunststoffmaterial. In dem dritten Schritt des Verfahrens wird wenigstens eine freiliegende, insbesondere ebene, Fläche bzw. Oberfläche der ersten Kunststoffmaterialschicht sonach mit einem zweiten flutbaren Kunststoffmaterial unter Ausbildung einer zweiten Kunststoffmaterialschicht überflutet. Die freiliegende Oberfläche der ersten Kunststoffmaterialschicht wird sonach durch Überfluten mit einem zweiten flutbaren Kunststoffmaterial unter Ausbildung einer zweiten Kunststoffmaterialschicht bedeckt. Der Flutungsvorgang des zweiten flutbaren Kunststoffmaterials kann durch Anlegen eines Unterdrucks bzw. eines Vakuums bedingt bzw. begünstigt werden.

Grundsätzlich ist es auch im Zusammenhang mit der Ausbildung der zweiten Kunststoffmaterialschicht denkbar, in dem dritten Schritt des Verfahrens mehrere gesonderte freiliegende, insbesondere ebene, Teilflächen bzw. Teiloberflächen der ersten Kunststoffmaterialschicht jeweils mit einem flutbaren Kunststoffmaterial unter Ausbildung mehrerer zusammenhängender oder nicht zusammenhängender Kunststoffmaterialschichtbereiche zu überfluten. Auch die zweite Kunststoffmaterialschicht kann sonach in einer Ebene mehrere zusammenhängende oder nicht zusammenhängende Kunststoffmaterialschichtbereiche umfassen.

Auch das zweite flutbare Kunststoffmaterial zeichnet sich insbesondere durch seine ausgesprochen fließfähigen Eigenschaften sowie ein gewisses Reaktionsvermögen, d. h. ein gewisses Aushärte- bzw. Verfestigungsvermögen, aus. Das zweite flutbare Kunststoffmaterial lässt sich sonach analog dem ersten flutbaren Kunststoffmaterial aushärten bzw. verfestigen, wobei im Rahmen eines entsprechenden Aushärte- bzw. Verfestigungsvorgangs typischerweise eine feste Verbindung des zweiten flutbaren Kunststoffmaterials mit der ersten Kunststoffmaterialschicht bzw. dem überfluteten Bereich der ersten Kunststoffmaterialschicht ausgebildet wird. Die in dem dritten Schritt ausbildbare bzw. ausgebildete zweite Kunststoffmaterialschicht ist sonach typischerweise fest, d. h. wie weiter unten näher erläutert, bei entsprechender chemischer Verträglichkeit gegebenenfalls stoffschlüssig, mit der darunter liegenden ersten Kunststoffmaterialschicht verbunden. Selbstverständlich ist es auch denkbar, dass die zweite Kunststoffmaterialschicht fest, bei entsprechender chemischer Verträglichkeit, gegebenenfalls stoffschlüssig, mit dem Trägerelement verbunden ist.

Der dritte Schritt des Verfahrens schließt sich zeitlich typischerweise unmittelbar an den zweiten Schritt des Verfahrens an. Insbesondere erfolgt der dritte Schritt des Verfahrens typischerweise unmittelbar nach dem Ausbilden der ersten Kunststoffmaterialschicht. Das Ausbilden der ersten Kunststoffmaterialschicht beinhaltet ein gewisses Aushärten bzw. Verfestigen des ersten flutbaren Kunststoffmaterials, jedoch nicht zwingend ein vollständiges Aushärten bzw. Verfestigen des ersten flutbaren Kunststoffmaterials. Für die beschriebene Variante des Ausbildens des Trägerelements in einem Spritzgießprozess gilt, dass sich das Fluten der zweiten Kunststoffmaterialschicht unmittelbar an das Fluten des Trägerelements anschließen kann. Das zweite flutbare Kunststoffmaterial kann nach Ausbilden der ersten Kunststoffmaterialschicht unmittelbar in die Kavität des Spritzgießwerkzeugs eingebracht werden.

Nach dem dritten Schritt des Verfahrens liegt sonach ein Trägerelement vor, welches zumindest abschnittsweise, gegebenenfalls vollständig, mit einer durch den ersten Flutungsvorgang ausgebildeten ersten Kunststoffmaterialschicht und zumindest abschnittsweise, gegebenenfalls vollständig, mit einer durch den zweiten Flutungsvorgang ausgebildeten zweiten Kunststoffmaterialschicht bedeckt ist. Es liegt sonach mindestens ein dreilagiger Aufbau des derart hergestellten Kunststoffbauteils, bestehend aus dem Trägerelement, der darauf ausgebildeten ersten Kunststoffmaterialschicht und der darauf ausgebildeten zweiten Kunststoffmaterialschicht vor.

An den dritten Schritt des Verfahrens könnte sich wenigstens ein weiterer Schritt des Verfahrens anschließen, in welchem ein Ausbilden einer eine, insbesondere ebene, freiliegende Fläche bzw. Oberfläche der zweiten Kunststoffmaterialschicht zumindest abschnittsweise, gegebenenfalls vollständig, bedeckenden weiteren Kunststoffmaterialschicht durch zumindest abschnittsweises Fluten der freiliegenden Fläche bzw. Oberfläche der zweiten Kunststoffmaterialschicht mit einem weiteren flutbaren bzw. flutfähigen Kunststoffmaterial erfolgt. Sämtliche Ausführungen im Zusammenhang mit dem dritten Schritt des Verfahrens gelten analog. Insbesondere gelten sämtliche Ausführungen im Zusammenhang mit einer zweiten Kunststoffmaterialschicht analog für jede weitere Kunststoffmaterialschicht.

Das hierin beschriebene Verfahren beinhaltet sonach mehrere, d. h. wenigstens zwei, nacheinander erfolgende getrennte Flutungsvorgänge, wobei in einem ersten Flutungsvorgang eine erste Kunststoffmaterialschicht aus einem ersten flutbaren bzw. flutfähigen Kunststoffmaterial und in einem nachfolgenden weiteren Flutungsvorgang eine weitere Kunststoffmaterialschicht aus einem weiteren flutbaren bzw. flutfähigen Kunststoffmaterial auf der zuvor ausgebildeten ersten Kunststoffmaterial ausgebildet wird.

Es liegt ein, insbesondere im Hinblick auf die Möglichkeit einer fertigungstechnisch effizienten Herstellung von Kunststoffbauteilen mit verbesserten strukturellen Eigenschaften, verbessertes Verfahren zur Herstellung eines Kunststoffbauteils vor.

Selbstverständlich lässt sich das Verfahren in analoger Weise auch zur Herstellung mehrerer entsprechender Kunststoffbauteile einsetzen. Das Verfahren kann insbesondere eingesetzt werden, um mehrere entsprechende Kunststoffbauteile simultan oder in zeitlich enger Abfolge herzustellen.

Das Trägerelement kann mit einer, insbesondere gegenüber der zu flutenden Fläche des Trägerelements erhabenen, Dichtungsstruktur, welche wenigstens die mit dem ersten flutbaren Kunststoffmaterial zu flutende Fläche bzw. Oberfläche des Trägerelements begrenzend umgibt, ausgebildet werden. Eine entsprechende Dichtungsstruktur kann z. B. durch einen die zu flutende Fläche bzw. Oberfläche des Trägerelements begrenzend umgebenden leistenartig bzw. -förmig erhöhten Abschnitt des Trägerelements ausgebildet werden. Eine entsprechende Dichtungsstruktur stellt sicher, dass das erste flutbare Kunststoffmaterial nur an solche Bereiche des herzustellenden Kunststoffbauteils gelangt, an welchen es bei einer konkreten Ausführung des herzustellenden Kunststoffbauteils auch vorgesehen ist. Eine entsprechende Dichtungsstruktur kann bei entsprechender Ausführung weiterhin sicherstellen, dass auch das zweite flutbare Kunststoffmaterial nur an solche Bereiche des herzustellenden Kunststoffbauteils gelangt, an welchen es bei einer konkreten Ausführung des herzustellenden Kunststoffbauteils auch vorgesehen ist.

Das Trägerelement wird im Bereich der zu flutenden Fläche bzw. Oberfläche mit einer, insbesondere ein oder mehrere gegenüber der zu flutenden Fläche bzw. Oberfläche erhabene, d. h. z. B. von dieser abragende oder hervorspringende, dreidimensionale Oberflächenstrukturelemente umfassenden, dreidimensionalen Oberflächenstrukturierung ausgebildet. Eine durch entsprechende dreidimensionale Oberflächenstrukturelemente gebildete bzw. solche umfassende dreidimensionale Oberflächenstrukturierung kann sich positiv auf die die optischen Eigenschaften des Trägerelements und somit des Kunststoffbauteils, d. h. insbesondere die Transluzenz, Transparenz, Durchlässigkeit für elektromagnetische Strahlen sowie die optische Anmutung des Trägerelements und somit des Kunststoffbauteils, sowie die strukturellen Eigenschaften des Trägerelements und somit des Kunststoffbauteils, d. h. insbesondere die mechanischen Eigenschaften des Trägerelements und somit des Kunststoffbauteils, auswirken. In Betracht kommen insoweit insbesondere solche dreidimensionalen Oberflächenstrukturelemente, welche sich positiv auf die strukturellen Eigenschaften, d. h. insbesondere die mechanischen Eigenschaften, des Trägerelements und somit des Kunststoffbauteils auswirken können. Bevorzugt kommen solche dreidimensionalen Oberflächenstrukturelemente in Betracht, welche alternativ oder ergänzend besondere akustische und/oder optische Eigenschaften des Kunststoffbauteils, d. h. insbesondere besondere Absorptions- und/oder Transmissionseigenschaften des Kunststoffbauteils gegenüber akustischen und/oder optischen Wellen, ermöglichen respektive erzeugen können. Entsprechende dreidimensionale Oberflächenstrukturelemente können auch besondere lichtleitende Eigenschaften des Kunststoffbauteils erzeugen. Entsprechende dreidimensionale Oberflächenstrukturelemente können auch eine besondere optische Anmutung des Kunststoffbauteils erzeugen.

Die geometrisch-konstruktive Ausgestaltung entsprechender dreidimensionaler Oberflächenstrukturelemente ist grundsätzlich frei wählbar. Entsprechende dreidimensionale Oberflächenstrukturelemente können z. B. als sich von der Fläche des Trägerelements in wenigstens einer Raumrichtung erstreckende, insbesondere vorsprungartige, Erhebungen oder in der Fläche des Trägerelements in wenigstens einer Raumrichtung erstreckende, insbesondere ausnehmungsartige, Vertiefungen ausgebildet sein oder solche umfassen. Insoweit wird lediglich beispielhaft auf rampen- oder pyramidenförmige Erhebungen und/oder Vertiefungen verwiesen. Selbstverständlich sind Mischungen geometrisch unterschiedlicher dreidimensionaler Oberflächenstrukturelemente denkbar.

Die erste Kunststoffmaterialschicht wird derart ausgebildet, dass eine entsprechende dreidimensionale Oberflächenstrukturierung gegenüber dieser zumindest abschnittsweise erhaben ist. Die erste Kunststoffmaterialschicht wird mit anderen Worten derart ausgebildet , dass eine entsprechende dreidimensionale Oberflächenstrukturierung nicht vollständig in der ersten Kunststoffmaterialschicht eingebettet wird. Eine entsprechende dreidimensionale Oberflächenstrukturierung kann sonach gegenüber der ersten Kunststoffmaterialschicht erhabene Abschnitte bzw. Bereiche umfassen, welche nicht in der ersten Kunststoffmaterialschicht eingebettet sind bzw. werden und somit freiliegen. Die Schichtdicke bzw. -stärke der ersten Kunststoffmaterialschicht kann sonach derart gewählt werden, dass diese unterhalb einer bestimmten Höhe, insbesondere einer maximalen Höhe, der dreidimensionalen Oberflächenstrukturelemente liegt. Gleichwohl ist es bei einer denkbaren lokal variierenden Schichtdicke bzw. -stärke der ersten Kunststoffmaterialschicht möglich, dass die erste Kunststoffmaterialschicht Bereiche aufweist, welche sich in vertikaler Richtung abschnittsweise entlang jeweiliger Oberflächenstrukturelemente erstrecken.

Die zweite Kunststoffmaterialschicht wird derart ausgebildet, dass die dreidimensionale Oberflächenstrukturierung insbesondere die gegenüber der ersten Kunststoffmaterialschicht erhabenen Abschnitte bzw. Bereiche der dreidimensionalen Oberflächenstrukturierung, vollständig in der zweiten Kunststoffmaterialschicht eingebettet werden. Eine entsprechende dreidimensionale Oberflächenstrukturierung kann sonach zwar gegenüber der ersten Kunststoffmaterialschicht erhabene Abschnitte bzw. Bereiche umfassen, welche jedoch in der zweiten Kunststoffmaterialschicht eingebettet sind bzw. werden und somit nicht freiliegen. Die Schichtdicke bzw. -stärke der zweiten Kunststoffmaterialschicht kann sonach derart gewählt werden, dass diese oberhalb einer bestimmten Höhe, insbesondere einer maximalen Höhe, gegebenenfalls abzüglich der Schichtdicke bzw. -stärke der ersten Kunststoffmaterialschicht, der dreidimensionalen Oberflächenstrukturierung liegt. Die Oberfläche des Kunststoffbauteils ist damit - zumindest in dem mehrfach gefluteten Bereich - durch die zweite Kunststoffmaterialschicht gebildet.

Das erste und das zweite flutbare Kunststoffmaterial können sich in wenigstens einem chemischen und/oder physikalischen Parameter unterscheiden. Erfindungsgemäß wird als erstes flutbares Kunststoffmaterial ein nicht transluzentes bzw. nicht transparentes Kunststoffmaterial und als zweites flutbares Kunststoffmaterial ein transparentes, d. h. wenigstens ein im Vergleich zu dem ersten flutbaren Kunststoffmaterial transluzentes bzw. transparenteres, Kunststoffmaterial verwendet. Die Verwendung eines transluzenten bzw. transparenten Kunststoffmaterials als zweites flutbares Kunststoffmaterial kann insbesondere in Verbindung mit einer entsprechenden dreidimensionalen Oberflächenstrukturierung des Trägerelements zu einer, insbesondere in haptischer wie auch optischer Hinsicht, besonders qualitativen bzw. qualitativ anmutenden Oberfläche des Kunststoffbauteils führen.

Ungeachtet deren transluzenter bzw. transparenter Eigenschaften gilt für sämtliche Kunststoffmaterialschichten des Kunststoffbauteils, dass diese für bestimmte akustische Wellen (Schallwellen) und/oder elektromagnetische Wellen, d. h. z. B. Lidar- oder Radarwellen, etc., durchlässig sein können.

Unabhängig davon, ob sich das erste und das zweite flutbare Kunststoffmaterial in wenigstens einem chemischen und/oder physikalischen Parameter unterscheiden, basieren diese jeweils auf einem auf Polyurethan- und/oder Polyurea- bzw. Polyharnstoff-basierenden flutbaren Kunststoffmaterial, d. h. insbesondere einem auf einem Polyurethan- bzw. Polyurea-basierenden flutbaren Kunststoffharz bzw. -Kunststofflack. Als erstes flutbares Kunststoffmaterial undr als zweites flutbares Kunststoffmaterial wird sonach ein flutbares Polyurethan- oder Polyureamaterial verwendet. Ein entsprechendes Polyurethan- oder Polyureamaterial zeichnet sich insbesondere durch besondere Eigenschaften, d. h. insbesondere eine besondere Korrosionsbeständigkeit, Temperaturbeständigkeit, UV-Beständigkeit, Kratzfestigkeit, etc., aus.

Es wurde erwähnt, dass das Ausbilden der ersten Kunststoffmaterialschicht ein gewisses Aushärten bzw. Verfestigen des ersten flutbaren Kunststoffmaterials, jedoch nicht zwingend ein vollständiges Aushärten bzw. Verfestigen des ersten flutbaren Kunststoffmaterials beinhaltet. Aufgrund des sonach bei Überfluten der ersten Kunststoffmaterialschicht mit dem zweiten flutbaren Kunststoffmaterial typischerweise (noch) gegebenen Restaushärtevermögens bzw. Restverfestigungsvermögens des ersten flutbaren Kunststoffmaterials kann eine stoffschlüssige Verbindung zwischen der ersten Kunststoffmaterialschicht und der zweiten Kunststoffmaterialschicht ausgebildet werden. Insbesondere unter der Voraussetzung einer ausreichenden chemischen Verträglichkeit kann das zweite flutbare Kunststoffmaterial sonach durch Fluten bzw. Überfluten der ersten Kunststoffmaterialschicht stoffschlüssig mit dem ersten flutbaren Kunststoffmaterial bzw. der ersten Kunststoffmaterialschicht verbunden werden. Das Trägerelement kann, insbesondere im Bereich seiner der zu flutenden bzw. gefluteten Fläche, gegenüber liegenden Fläche mit wenigstens einer, z. B. folienartigen bzw. -förmigen, Dekor- und/oder Funktionsschicht verbunden werden. Die Verbindung des Trägerelements mit einer entsprechenden Dekor- und/oder Funktionsschicht kann vor, nach, oder während der Flutungsvorgänge erfolgen. Zur Verbindung des Trägerelements mit einer entsprechenden Dekor- und/oder Funktionsschicht kann z. B. ein In-Mould-Decoration-Prozess (IMD-Prozess) eingesetzt werden.

Die Erfindung betrifft neben dem Verfahren auch ein gemäß dem Verfahren hergestelltes Kunststoffbauteil. Sämtliche Ausführungen im Zusammenhang mit dem Verfahren gelten analog für das Kunststoffbauteil.

Die Erfindung betrifft neben dem Verfahren und dem Kunststoffbauteil auch eine Vorrichtung zur Herstellung eines Kunststoffbauteils, welches ein Trägerelement und mehrere darauf angeordnete oder ausgebildete Kunststoffmaterialschichten umfasst. Die Vorrichtung umfasst ein mehrere Kavitäten umfassendes Werkzeug.

Das Werkzeug kann in einer ersten Ausführungsform wenigstens drei Kavitäten umfassen, wobei eine erste Kavität zum Ausbilden eines Trägerelements des herzustellenden Kunststoffbauteils aus einem Kunststoffmaterial eingerichtet ist, eine zweite Kavität zum Ausbilden einer eine freiliegende, insbesondere ebene, Fläche des Trägerelements zumindest abschnittsweise bedeckenden ersten Kunststoffmaterialschicht durch zumindest abschnittsweises Fluten der Fläche des Trägerelements mit einem ersten flutbaren Kunststoffmaterial eingerichtet ist, und eine dritte Kavität zum Ausbilden einer eine freiliegende Fläche der ersten Kunststoffmaterialschicht zumindest abschnittsweise bedeckenden zweiten Kunststoffmaterialschicht durch zumindest abschnittsweises Fluten der Fläche der ersten Kunststoffmaterialschicht mit einem zweiten flutbaren Kunststoffmaterial eingerichtet ist. Für den Fall von mehr als zwei durch Fluten ausgebildeten Kunststoffmaterialschichten gilt, dass die Anzahl der Kavitäten entsprechend anzupassen ist, wobei für die Ausbildung des Trägerelements und für die Ausbildung jeweiliger Kunststoffmaterialschichten typischerweise jeweils eine (eigene) Kavität vorzusehen ist.

Das Werkzeug kann in einer zweiten Ausführungsform (nur) zwei Kavitäten umfassen, wobei eine erste Kavität zum Aufnehmen eines Trägerelements und zum Ausbilden einer eine freiliegende Fläche des Trägerelements zumindest abschnittsweise bedeckenden ersten Kunststoffmaterialschicht durch zumindest abschnittsweises Fluten der freiliegenden Fläche des Trägerelements mit einem ersten flutbaren Kunststoffmaterial eingerichtet ist, und eine zweite Kavität zum Ausbilden einer eine freiliegende Fläche der ersten Kunststoffmaterialschicht zumindest abschnittsweise bedeckenden zweiten Kunststoffmaterialschicht durch zumindest abschnittsweises Fluten der freiliegenden Fläche der ersten Kunststoffmaterialschicht mit einem zweiten flutbaren Kunststoffmaterial eingerichtet ist.

Denkbar ist es auch gesonderte Werkzeuge für gesonderte Schritte des Verfahrens zu verwenden. Es können sonach mehrere jeweils wenigstens eine Kavität aufweisende Werkzeuge verwendet werden. Beispielsweise kann in einer Kavität eines ersten Werkzeugs die Ausbildung des Trägerelements und in einer oder mehreren Kavitäten eines weiteren Werkzeugs die Ausbildung der Kunststoffmaterialschichten erfolgen.

Für alle Ausführungsformen gilt, dass das bzw. ein Werkzeug z. B. als Drehtellerwerkzeug oder als Indexplattenwerkzeug oder als Schiebetischwerkzeug oder als Würfelwerkzeug ausgebildet sein kann. Die Vorrichtung kann sonach z. B. als Drehtellerwerkzeug oder Indexplattenwerkzeug oder Schiebetischwerkzeug oder Würfelwerkzeug ausgebildet sein oder wenigstens ein solches umfassen.

Die Erfindung ist anhand von Ausführungsbeispielen in den Zeichnungen näher erläutert. Dabei zeigt:
- Fig. 1 - 3: jeweils eine Prinzipdarstellung eines Schritts eines Verfahrens zur Herstellung eines Kunststoffbauteils gemäß einem Ausführungsbeispiel zur Veranschaulichung der Erfindung;
- Fig. 4 - 6: jeweils eine Prinzipdarstellung eines Schritts eines Verfahrens zur Herstellung eines Kunststoffbauteils gemäß einem ersten Ausführungsbeispiel; und
- Fig. 7: eine Prinzipdarstellung eines gemäß einem Ausführungsbeispiel eines Verfahrens zur Herstellung eines Kunststoffbauteils hergestellten Kunststoffbauteils zur Veranschaulichung der Erfindung;
- Fig. 8: eine Prinzipdarstellung eines gemäß einem Ausführungsbeispiel eines Verfahrens zur Herstellung eines Kunststoffbauteils hergestellten Kunststoffbauteils; und
- Fig. 9, 10: jeweils eine Prinzipdarstellung eines gemäß weiteren Ausführungsbeispielen eines Verfahrens zur Herstellung eines Kunststoffbauteils hergestellten Kunststoffbauteils.

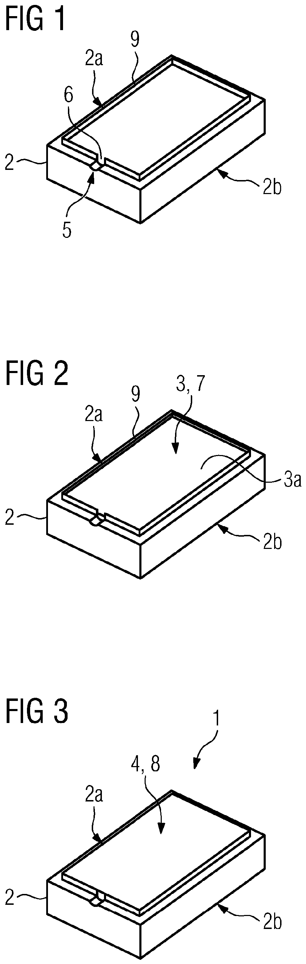

In den Fig. 1 - 3 ist jeweils eine Prinzipdarstellung eines Schritts eines Verfahrens zur Herstellung eines Kunststoffbauteils 1 gemäß einem Ausführungsbeispiel dargestellt.

Das Verfahren dient zur Herstellung eines Kunststoffbauteils 1, welches ein Trägerelement 2 und mehrere darauf, d. h. auf einer Fläche 2a bzw. Oberfläche des Trägerelements 2, angeordnete oder ausgebildete Kunststoffmaterialschichten 3, 4 umfasst. Das Kunststoffbauteil 1 weist sonach einen mehrlagigen bzw. -schichtigen Aufbau, bestehend aus dem Trägerelement 2 und den darauf angeordneten oder ausgebildeten Kunststoffmaterialschichten 3, 4, auf. Wie sich im Weiteren ergibt, handelt es sich bei den Kunststoffmaterialschichten 3, 4 um Kunststofflackschichten, d. h. um Schichten aus einem lackartigen bzw. -förmigen Kunststoffmaterial bzw. einem Kunststofflack.

Bei einem verfahrensgemäß herstellbaren bzw. herzustellenden Kunststoffbauteil 1 kann es sich z. B. um ein an oder in einem Kraftfahrzeug zu verbauendes Kunststoffbauteil handeln. Andere Anwendungs- bzw. Einsatzgebiete sind jedoch denkbar.

Das Verfahren umfasst die im Folgenden im Zusammenhang mit den Fig 1 - 3 näher beschriebenen Schritte:
In einem ersten Schritt des Verfahrens erfolgt ein Ausbilden des Trägerelements 2 des herzustellenden Kunststoffbauteils 1 aus einem Kunststoffmaterial. Das Trägerelement 2 wird durch ein einen Teilprozess des Verfahrens bildenden Kunststoffverarbeitungsprozess ausgebildet. Bei dem Kunststoffverarbeitungsprozess handelt es sich in den in den Fig. gezeigten Ausführungsbeispielen um einen Spritzgießprozess. Das Trägerelement 2 wird sonach im Rahmen eines Spritzgießprozesses, d. h. durch Spritzgießen eines spritzgießfähigen duro- oder thermoplastischen Kunststoffmaterials, ausgebildet. Bei dem Kunststoffmaterial kann es sich z. B. um einen technischen Kunststoff, d. h. z. B. ABS, PA, PC, etc., oder um ein Polyolefin, d. h. z. B. PE oder PP handeln.

Im Rahmen des Kunststoffverarbeitungsprozesses, d. h. des Spritzgießprozesses, zum Ausbilden des Trägerelements 2 können an dem Trägerelement 2 bestimmte fertigungstechnisch und/oder bauteiltechnisch relevante Funktionselemente 5, d. h. z. B. ein oder mehrere Angusskanäle 6 für die im Rahmen des Verfahrens im Weiteren zu verarbeitenden flutbaren Kunststoffmaterialien 7, 8, und/oder ein oder mehrere Befestigungselemente, z. B. in Form von Formschlusselementen, wie z. B. Rastelementen, für die Befestigung des Kunststoffbauteils 1 an einem Drittgegenstand, etc., ausgebildet werden.

Anhand von Fig. 1 ist ersichtlich, dass das Trägerelement 2 typischerweise mit einer flächigen Geometrie ausgebildet wird. Die flächige Geometrie des Trägerelements 2 zeichnet sich durch wenigstens eine zumindest abschnittsweise, gegebenenfalls vollständig, ebene Fläche 2a bzw. Oberfläche des Trägerelements 2 aus. Das Trägerelement 2 weist sonach eine eine Oberseite des Trägerelements 2 bildende Fläche 2a bzw. Oberfläche und eine eine Unterseite des Trägerelements 2 bildende Fläche 2b bzw. Oberfläche auf.

Fig. 1 zeigt, dass nach dem ersten Schritt des Verfahrens ein entsprechendes Trägerelement 2 vorliegt.

In einem auf den ersten Schritt folgenden zweiten Schritt des Verfahrens erfolgt ein Ausbilden einer die bzw. einen Teil der freiliegenden Fläche des Trägerelements 2 bedeckenden ersten Kunststoffmaterialschicht 3 durch zumindest abschnittsweises Fluten der freiliegenden Fläche des Trägerelements 2 mit einem ersten flutbaren bzw. flutfähigen Kunststoffmaterial 7. In dem zweiten Schritt des Verfahrens wird die freiliegende Fläche des Trägerelements 2 sonach mit einem ersten flutbaren Kunststoffmaterial 7 unter Ausbildung der ersten Kunststoffmaterialschicht 3 überflutet. Die freiliegende Fläche des Trägerelements 2 wird sonach durch Überfluten mit dem ersten flutbaren Kunststoffmaterial 7 unter Ausbildung der ersten Kunststoffmaterialschicht 3 bedeckt. Der Flutungsvorgang des ersten flutbaren Kunststoffmaterials 7 kann durch Anlegen eines Unterdrucks bzw. eines Vakuums bedingt oder begünstigt werden.

Das erste flutbare Kunststoffmaterial 7 zeichnet sich durch seine ausgesprochen fließfähigen Eigenschaften sowie ein gewisses Reaktionsvermögen, d. h. ein gewisses Aushärte- bzw. Verfestigungsvermögen, aus. Das erste flutbare Kunststoffmaterial 7 lässt sich sonach aushärten bzw. verfestigen, wobei im Rahmen eines entsprechenden Aushärte- bzw. Verfestigungsvorgangs eine feste, gegebenenfalls stoffschlüssige, Verbindung des ersten flutbaren Kunststoffmaterials 7 mit dem Trägerelement 2 bzw. dem überfluteten Bereich des Trägerelements 2 ausgebildet wird. Die in dem zweiten Schritt ausbildbare bzw. ausgebildete erste Kunststoffmaterialschicht 3 ist sonach fest, bei entsprechender chemischer Verträglichkeit gegebenenfalls sogar stoffschlüssig, mit dem darunterliegenden Trägerelement 2 verbunden.

Bei dem ersten flutbaren Kunststoffmaterial 7 handelt es sich um einen auf Polyurethan- oder Polyurea-basierenden Kunststofflack. Das erste flutbare Kunststoffmaterial 7 ist in dem Ausführungsbeispiel nicht transluzent bzw. nicht transparent.

Der zweite Schritt des Verfahrens schließt sich zeitlich typischerweise unmittelbar an den ersten Schritt des Verfahrens an. Insbesondere erfolgt der zweite Schritt des Verfahrens typischerweise unmittelbar nach dem Ausbilden des Trägerelements 2. Für die in den Ausführungsbeispielen beschriebene Variante des Ausbildens des Trägerelements 2 in einem Spritzgießprozess gilt, dass sich das Fluten des Trägerelements 2 mit dem ersten flutbaren Kunststoffmaterial 7 unmittelbar an das Spritzgießen des Trägerelements 2 anschließen kann. Das erste flutbare Kunststoffmaterial 7 kann nach dem Ausbilden des Trägerelements 2 unmittelbar in die Kavität des in den Fig. nicht gezeigten Spritzgießwerkzeugs eingebracht werden.

Fig. 2 zeigt, dass nach dem zweiten Schritt des Verfahrens ein Trägerelement 2 vorliegt, welches abschnittsweise mit der ersten Kunststoffmaterialschicht 3 bedeckt ist.

In einem auf den zweiten Schritt folgenden dritten Schritt des Verfahrens erfolgt ein Ausbilden der eine freiliegende Fläche 3a der ersten Kunststoffmaterialschicht 3 bedeckenden zweiten Kunststoffmaterialschicht 4 durch zumindest abschnittsweises Fluten der freiliegenden Fläche 3a der ersten Kunststoffmaterialschicht 3 mit einem zweiten flutbaren bzw. flutfähigen Kunststoffmaterial 8. In dem dritten Schritt des Verfahrens wird die freiliegende Fläche 3a der ersten Kunststoffmaterialschicht 3 sonach mit einem zweiten flutbaren Kunststoffmaterial 8 unter Ausbildung der zweiten Kunststoffmaterialschicht 4 überflutet. Die freiliegende Fläche 3a der ersten Kunststoffmaterialschicht 3 wird sonach durch Überfluten mit dem zweiten flutbaren Kunststoffmaterial 8 unter Ausbildung der zweiten Kunststoffmaterialschicht 4 bedeckt. Der Flutungsvorgang des zweiten flutbaren Kunststoffmaterials 8 kann durch Anlegen eines Unterdrucks bzw. eines Vakuums bedingt bzw. begünstigt werden.

Auch das zweite flutbare Kunststoffmaterial 8 zeichnet sich durch seine ausgesprochen fließfähigen Eigenschaften sowie ein gewisses Reaktionsvermögen, d. h. ein gewisses Aushärte- bzw. Verfestigungsvermögen, aus. Das zweite flutbare Kunststoffmaterial 8 lässt sich sonach analog dem ersten flutbaren Kunststoffmaterial 7 aushärten bzw. verfestigen, wobei im Rahmen eines entsprechenden Aushärte- bzw. Verfestigungsvorgangs eine feste, gegebenenfalls stoffschlüssige, Verbindung des zweiten flutbaren Kunststoffmaterials 8 mit der ersten Kunststoffmaterialschicht 3 bzw. dem überfluteten Bereich der ersten Kunststoffmaterialschicht 3 ausgebildet wird. Die in dem dritten Schritt ausbildbare bzw. ausgebildete zweite Kunststoffmaterialschicht 4 ist sonach fest, bei entsprechender chemischer Verträglichkeit gegebenenfalls sogar stoffschlüssig, mit der darunter liegenden ersten Kunststoffmaterialschicht 3 verbunden.

Bei dem zweiten flutbaren Kunststoffmaterial 8 handelt es sich ebenso um einen auf Polyurethan- oder Polyurea-basierenden Kunststofflack. Das zweite flutbare Kunststoffmaterial 8 ist in dem Ausführungsbeispiel im Gegensatz zu dem ersten flutbaren Kunststoffmaterial 7 jedoch transluzent bzw. transparent.

Der dritte Schritt des Verfahrens schließt sich zeitlich typischerweise unmittelbar an den zweiten Schritt des Verfahrens an. Insbesondere erfolgt der dritte Schritt des Verfahrens typischerweise unmittelbar nach dem Ausbilden der ersten Kunststoffmaterialschicht 3. Das Ausbilden der ersten Kunststoffmaterialschicht 3 beinhaltet typischerweise ein gewisses Aushärten bzw. Verfestigen des ersten flutbaren Kunststoffmaterials 7, jedoch nicht zwingend ein vollständiges Aushärten bzw. Verfestigen des ersten flutbaren Kunststoffmaterials 7. Für die in den Ausführungsbeispielen beschriebene Variante des Ausbildens des Trägerelements 2 in einem Spritzgießprozess gilt, dass sich das Fluten der zweiten Kunststoffmaterialschicht 4 unmittelbar an das Fluten des Trägerelements 2 anschließen kann. Das zweite flutbare Kunststoffmaterial 8 kann nach Ausbilden der ersten Kunststoffmaterialschicht 3 unmittelbar in die Kavität des in den Fig. nicht gezeigten Spritzgießwerkzeugs eingebracht werden.

Fig. 3 zeigt, dass nach dem dritten Schritt des Verfahrens ein Trägerelement 2 vorliegt, welches abschnittsweise mit einer durch den ersten Flutungsvorgang ausgebildeten ersten Kunststoffmaterialschicht 3 und mit einer durch den zweiten Flutungsvorgang ausgebildeten zweiten Kunststoffmaterialschicht 4 bedeckt ist.

Es liegt sonach ein dreilagiger Aufbau des derart hergestellten Kunststoffbauteils 1, bestehend aus dem Trägerelement 2, der darauf ausgebildeten ersten Kunststoffmaterialschicht 3 und der darauf ausgebildeten zweiten Kunststoffmaterialschicht 4, vor.

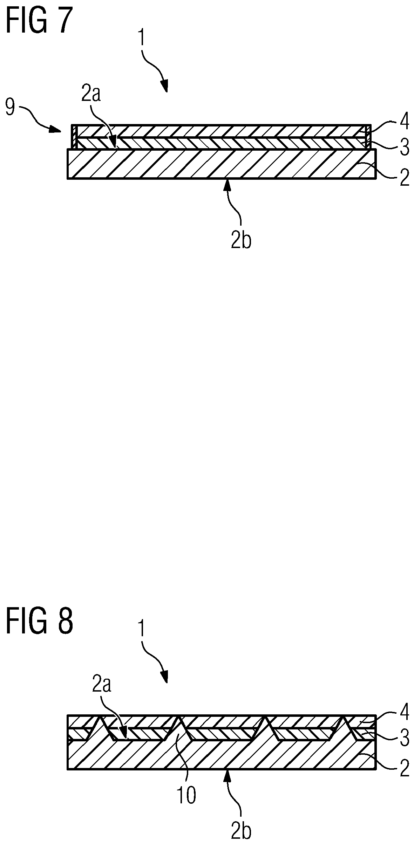

Anhand von Fig. 1 und Fig. 7 ist ferner ersichtlich, dass das Trägerelement 2 mit einer, insbesondere gegenüber der zu flutenden Fläche des Trägerelements 2 erhabenen, Dichtungsstruktur 9, welche wenigstens die mit dem ersten flutbaren Kunststoffmaterial 7 zu flutende Fläche des Trägerelements 2 begrenzend umgibt, ausgebildet werden kann. Die Dichtungsstruktur 9 ist in dem Ausführungsbeispiel durch einen die zu flutende Fläche des Trägerelements 2 begrenzend umgebenden leistenartig bzw. -förmig erhöhten Abschnitt 2b des Trägerelements 2 ausgebildet.

Fig. 7 zeigt eine Prinzipdarstellung eines gemäß dem in den Fig. 1 - 3 gezeigten Ausführungsbeispiel hergestellten Kunststoffbauteils 1 in einer geschnittenen Ansicht. Der beschriebene mehrlagige bzw. -schichtige Aufbau des Kunststoffbauteils 1 ist aus Fig. 7 klar ersichtlich.

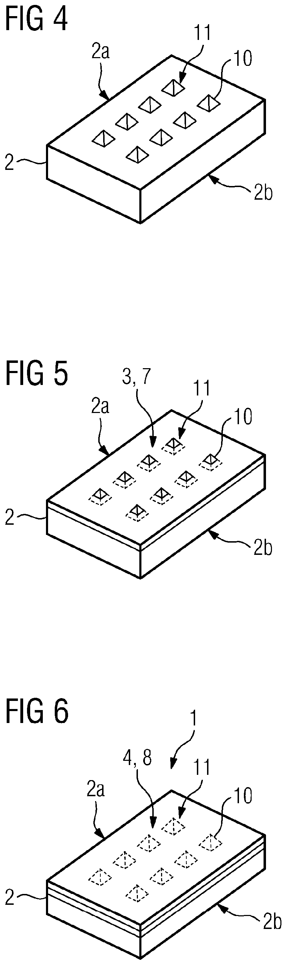

In den Fig. 4 - 6 ist jeweils eine Prinzipdarstellung eines Schritts eines Verfahrens zur Herstellung eines Kunststoffbauteils 1 gemäß einem ersten Ausführungsbeispiel dargestellt.

Die in den Fig. 4 - 6 gezeigten Verfahrensschritte des weiteren Ausführungsbeispiels entsprechen im Wesentlichen den in den Fig. 1 - 3 gezeigten Verfahrensschritten des Ausführungsbeispiels gemäß den Fig. 1 - 3. Anhand des in den Fig. 4 - 6 gezeigten ersten Ausführungsbeispiels ist jedoch ersichtlich, dass das Trägerelement 2 im Bereich der zu flutenden Fläche mit einer mehrere gegenüber der zu flutenden Fläche erhabene, d. h. in dem Ausführungsbeispiel von dieser abragende bzw. hervorspringende, dreidimensionale Oberflächenstrukturelemente 10 umfassenden dreidimensionalen Oberflächenstrukturierung 11 ausgebildet werden kann. Die dreidimensionalen Oberflächenstrukturelemente 10 können besondere akustische und/oder optische Eigenschaften des Kunststoffbauteils 1, d. h. insbesondere besondere Absorptions- und/oder Transmissionseigenschaften des Kunststoffbauteils 1 gegenüber akustischen und/oder optischen Wellen, ermöglichen respektive erzeugen. Entsprechende dreidimensionale Oberflächenstrukturelemente 10 können ferner eine besondere optische Anmutung des Kunststoffbauteils 1 erzeugen. Die durch die Oberflächenstrukturelemente 10 gebildete dreidimensionale Oberflächenstrukturierung 11 kann sich auch positiv auf die strukturellen Eigenschaften, d. h. insbesondere die mechanischen Eigenschaften, des Trägerelements 2 und somit des Kunststoffbauteils 1 auswirken.

Die geometrisch-konstruktive Ausgestaltung entsprechender dreidimensionaler Oberflächenstrukturelemente 10 ist grundsätzlich frei wählbar. In dem in den Fig. 4 - 6 gezeigten Ausführungsbeispiel sind beispielhaft dreidimensionale Oberflächenstrukturelemente 10 in Form von rampen- oder pyramidenförmigen Erhebungen gezeigt verwiesen. Andere geometrisch-konstruktive Ausgestaltungen entsprechender dreidimensionaler Oberflächenstrukturelemente 10 sind denkbar.

Anhand der Fig. 2 entsprechenden Fig. 5 des ersten Ausführungsbeispiels, welche sonach das nach dem zweiten Schritt des Verfahrens vorliegende abschnittsweise mit der ersten Kunststoffmaterialschicht 3 bedeckte Trägerelement 2 zeigt, ist ersichtlich, dass die erste Kunststoffmaterialschicht 3 derart ausgebildet werden kann, dass die dreidimensionale Oberflächenstrukturierung 11 gegenüber dieser zumindest abschnittsweise erhaben ist. Die erste Kunststoffmaterialschicht 3 kann also derart ausgebildet werden, dass die dreidimensionale Oberflächenstrukturierung 11 nicht vollständig in der ersten Kunststoffmaterialschicht 3 eingebettet wird. Die dreidimensionale Oberflächenstrukturierung 11 umfasst sonach gegenüber der ersten Kunststoffmaterialschicht 3 erhabene Abschnitte bzw. Bereiche, welche nicht in der ersten Kunststoffmaterialschicht 3 eingebettet sind bzw. werden und somit freiliegen. Die Schichtdicke bzw. -stärke der ersten Kunststoffmaterialschicht 3 wird sonach derart gewählt, dass diese unterhalb einer bestimmten Höhe, insbesondere einer maximalen Höhe, der dreidimensionalen Oberflächenstrukturelemente 10 liegt.

Anhand der Fig. 3 entsprechenden Fig. 6 des ersten Ausführungsbeispiels, welche sonach das nach dem dritten Schritt des Verfahrens vorliegende abschnittsweise mit der ersten Kunststoffmaterialschicht 3 und der zweiten Kunststoffmaterialschicht 4 bedeckte Trägerelement 2 zeigt, ist ersichtlich, dass die zweite Kunststoffmaterialschicht 4 derart ausgebildet werden kann, dass die dreidimensionale Oberflächenstrukturierung 11, d. h. insbesondere die gegenüber der ersten Kunststoffmaterialschicht 3 erhabenen Abschnitte bzw. Bereiche der dreidimensionalen Oberflächenstrukturierung 11, vollständig in der zweiten Kunststoffmaterialschicht 4 eingebettet werden. Die dreidimensionale Oberflächenstrukturierung 11 umfasst sonach zwar gegenüber der ersten Kunststoffmaterialschicht 3 erhabene Abschnitte bzw. Bereiche, welche jedoch in der zweiten Kunststoffmaterialschicht 4 eingebettet sind bzw. werden und somit nicht freiliegen. Die Schichtdicke bzw. -stärke der zweiten Kunststoffmaterialschicht 4 wird sonach derart gewählt, dass diese oberhalb einer bestimmten Höhe, insbesondere einer maximalen Höhe, gegebenenfalls abzüglich der Schichtdicke bzw. -stärke der ersten Kunststoffmaterialschicht 3, der dreidimensionalen Oberflächenstrukturierung 11 liegt. Die Oberfläche des Kunststoffbauteils 1 ist damit - zumindest in dem mehrfach gefluteten Bereich - durch die zweite Kunststoffmaterialschicht 4 gebildet.

Fig. 8 zeigt eine Prinzipdarstellung eines gemäß dem in den Fig. 4 - 6 gezeigten Ausführungsbeispiel hergestellten Kunststoffbauteils 1 in einer geschnittenen Ansicht. Der beschriebene mehrlagige bzw. -schichtige Aufbau des Kunststoffbauteils 1 ist aus Fig. 8 klar ersichtlich.

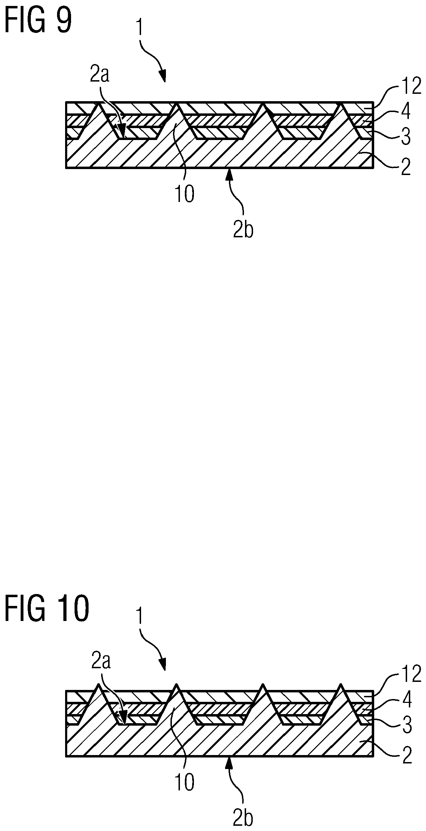

Die Fig. 9, 10 zeigen jeweils eine Prinzipdarstellung eines gemäß weiteren Ausführungsbeispielen eines Verfahrens zur Herstellung eines Kunststoffbauteils 1 hergestellten Kunststoffbauteils 1 in einer geschnittenen Ansicht.

Anhand der Fig. 9, 10 soll exemplarisch erläutert werden, dass verfahrensgemäß in entsprechender Weise grundsätzlich auch mehr als zwei aus flutbaren Materialien gebildete Kunststoffmaterialschichten 3, 4, 12 ausgebildet werden können. In den in den Fig. 9, 10 gezeigten Ausführungsbeispielen sind beispielhaft drei Kunststoffmaterialschichten 3, 4, 12 dargestellt; jedoch sind grundsätzlich auch mehr als drei Kunststoffmaterialschichten 3, 4, 12 denkbar.

In Fig. 9 ist ferner gezeigt, dass die Kunststoffmaterialschichten 3, 4, 12 analog dem in Fig. 8 gezeigten Ausführungsbeispiel ausgebildet werden können. In dem in Fig. 9 gezeigten Ausführungsbeispiel sind die Oberflächenstrukturelemente 10 entsprechend vollständig in den drei Kunststoffmaterialschichten 3, 4, 12 eingebettet.

In Fig. 10 ist gezeigt, dass die Oberflächenstrukturelemente 10 nicht vollständig in den drei Kunststoffmaterialschichten 3, 4, 12 eingebettet sein müssen. Vielmehr ist es auch möglich, dass die drei Kunststoffmaterialschichten 3, 4, 12 derart ausgebildet werden, dass die dreidimensionale Oberflächenstrukturierung 11 gegenüber diesen zumindest abschnittsweise erhaben ist.

Für alle Ausführungsbeispiele des Verfahrens gilt, dass das Ausbilden der ersten Kunststoffmaterialschicht 3 ein gewisses Aushärten bzw. Verfestigen des ersten flutbaren Kunststoffmaterials 7, jedoch typischerweise kein vollständiges Aushärten bzw. Verfestigen des ersten flutbaren Kunststoffmaterials 7 beinhaltet. Aufgrund des sonach bei Überfluten der ersten Kunststoffmaterialschicht 3 mit dem zweiten flutbaren Kunststoffmaterial 8 typischerweise (noch) gegebenen Restaushärtevermögens bzw. Restverfestigungsvermögens des ersten flutbaren Kunststoffmaterials 7 kann eine stoffschlüssige Verbindung zwischen der ersten Kunststoffmaterialschicht 3 und der zweiten Kunststoffmaterialschicht 4 ausgebildet werden. Das zweite flutbare Kunststoffmaterial 8 bzw. die zweite Kunststoffmaterialschicht 4 kann sonach durch Fluten bzw. Überfluten der ersten Kunststoffmaterialschicht 3 mit dem zweiten flutbaren Kunststoffmaterial 8 stoffschlüssig mit dem ersten flutbaren Kunststoffmaterial 7 bzw. der ersten Kunststoffmaterialschicht 3 verbunden werden. Analoges gilt bei entsprechender Ausbildung von mehr als zwei Kunststoffmaterialschichten 3, 4.

Wenngleich in den Fig. nicht gezeigt, kann das Trägerelement 2, insbesondere im Bereich seiner der zu flutenden bzw. gefluteten Fläche, gegenüber liegenden Fläche 2b mit wenigstens einer, z. B. folienartigen bzw. -förmigen, Dekor- und/oder Funktionsschicht verbunden werden. Die Verbindung des Trägerelements 2 mit einer entsprechenden Dekor- und/oder Funktionsschicht kann vor, nach, oder während der Flutungsvorgänge erfolgen. Zur Verbindung des Trägerelements 2 mit einer entsprechenden Dekor- und/oder Funktionsschicht kann z. B. ein In-Mould-Decoration-Prozess (IMD-Prozess) eingesetzt werden.

Die im Zusammenhang mit den Fig. beschriebenen Ausführungsbeispiele des Verfahrens können mit einer Vorrichtung (nicht gezeigt) zur Herstellung eines Kunststoffbauteils 1 durchgeführt werden Die Vorrichtung umfasst ein mehrere Kavitäten umfassendes Werkzeug (nicht gezeigt). Das Werkzeug kann z. B. wenigstens drei Kavitäten umfassen, wobei eine erste Kavität zum Ausbilden eines Trägerelements 2 des herzustellenden Kunststoffbauteils aus einem Kunststoffmaterial eingerichtet ist, eine zweite Kavität zum Ausbilden einer eine freiliegende Fläche des Trägerelements 2 bedeckenden ersten Kunststoffmaterialschicht 3 durch Fluten der freiliegenden Fläche des Trägerelements 2 mit einem ersten flutbaren Kunststoffmaterial 7 eingerichtet ist, und eine dritte Kavität zum Ausbilden einer eine freiliegende Fläche der ersten Kunststoffmaterialschicht 3 bedeckenden zweiten Kunststoffmaterialschicht 4 durch Fluten der freiliegenden Fläche der ersten Kunststoffmaterialschicht 3 mit einem zweiten flutbaren Kunststoffmaterial 8 eingerichtet ist.

Das Werkzeug kann z. B. als Drehtellerwerkzeug oder als Indexplattenwerkzeug oder als Schiebetischwerkzeug oder als Würfelwerkzeug ausgebildet sein kann.

## Patentansprüche

1. Verfahren zur Herstellung eines Kunststoffbauteils (1), welches ein Trägerelement (2) und mehrere darauf angeordnete oder ausgebildete Kunststoffmaterialschichten (3, 4) umfasst, umfassend die Schritte:
- Ausbilden eines Trägerelements (2) des herzustellenden Kunststoffbauteils (1) aus einem Kunststoffmaterial oder Bereitstellen eines solchen Trägerelements (2);
- Ausbilden einer eine freiliegende Fläche des Trägerelements (2) zumindest abschnittsweise bedeckenden ersten Kunststoffmaterialschicht (3) durch zumindest abschnittsweises Fluten der freiliegenden Fläche des Trägerelements (2) mit einem ersten flutbaren Kunststoffmaterial (7);
- Ausbilden einer eine freiliegende Fläche der ersten Kunststoffmaterialschicht (3) zumindest abschnittsweise bedeckenden zweiten Kunststoffmaterialschicht (4) durch zumindest abschnittsweises Fluten der freiliegenden Fläche der ersten Kunststoffmaterialschicht (3) mit einem zweiten flutbaren Kunststoffmaterial (8), wobei das Trägerelement (2) im Bereich der zu flutenden Fläche mit einer, insbesondere ein oder mehrere gegenüber der zu flutenden Fläche erhabene dreidimensionale Oberflächenstrukturelemente (10) umfassenden, dreidimensionalen Oberflächenstrukturierung (11) ausgebildet wird, wobei die erste Kunststoffmaterialschicht (3) derart ausgebildet wird, dass die dreidimensionale Oberflächenstrukturierung (11) gegenüber dieser zumindest abschnittsweise erhaben ist, und die zweite Kunststoffmaterialschicht (4) derart ausgebildet wird, dass die dreidimensionale Oberflächenstrukturierung (11), insbesondere die gegenüber der ersten Kunststoffmaterialschicht (3) erhabenen Abschnitte der dreidimensionalen Oberflächenstrukturierung (11), vollständig in der zweiten Kunststoffmaterialschicht (4) eingebettet wird, wobei als erstes flutbares Kunststoffmaterial (7) ein nicht transluzentes oder nicht transparentes Kunststoffmaterial und als zweites flutbares Kunststoffmaterial (8) ein transluzentes oder transparentes Kunststoffmaterial verwendet wird, **dadurch gekennzeichnet, dass** als erstes flutbares Kunststoffmaterial (7) und als zweites flutbares Kunststoffmaterial (8) ein flutbares Polyurethan- oder Polyureamatearial verwendet wird, wobei aufgrund des bei Überfluten der ersten Kunststoffmaterialschicht (3) mit dem zweiten flutbaren Kunststoffmaterial noch gegebenen Restaushärtevermögens oder Restverfestigungsvermögens des ersten flutbaren Kunststoffmaterials eine stoffschlüssige Verbindung zwischen der ersten Kunststoffmaterialschicht (3) und der zweiten Kunststoffmaterialschicht (4) ausgebildet wird.

2. Verfahren nach Anspruch 1, **dadurch gekennzeichnet, dass** das Trägerelement (2) durch Spritzgießen eines spritzgießfähigen, insbesondere duro- oder thermoplastischen, Kunststoffmaterials ausgebildet wird.

3. Verfahren nach Anspruch 1 oder 2, **dadurch gekennzeichnet, dass** das Trägerelement (2) mit einer, insbesondere gegenüber der zu flutenden Fläche des Trägerelements (2) erhabenen, Dichtungsstruktur (9), welche wenigstens die mit dem ersten flutbaren Kunststoffmaterial (7) zu flutende Fläche des Trägerelements (2) begrenzend umgibt, ausgebildet wird.

4. Verfahren nach einem der vorhergehenden Ansprüche, **dadurch gekennzeichnet, dass** das Trägerelement (2), insbesondere im Bereich seiner der zu flutenden bzw. gefluteten Fläche, gegenüber liegenden Fläche mit wenigstens einer Dekor- und/oder Funktionsschicht verbunden wird.

5. Kunststoffbauteil (1), **dadurch gekennzeichnet, dass** es gemäß einem Verfahren nach einem der vorhergehenden Ansprüche hergestellt ist.

## Claims

1. Method for producing a plastic component (1) which comprises a carrier element (2) and several plastic material layers (3, 4) arranged or formed thereon, comprising the steps:
- formation of a carrier element (2) of the plastic component (1) to be produced from a plastic material or provision of such a carrier element (2);
- formation of a first plastic material layer (3), which covers an exposed surface of the carrier element (2) at least in sections, by flooding of the exposed surface of the carrier element (2) at least in sections by a first floodable plastic material (7);
- formation of a second plastic material layer (4), which covers an exposed surface of the first plastic material layer (3) at least in sections, by flooding of the exposed surface of the first plastic material layer (3) at least in sections by a second floodable plastic material (8), wherein
the carrier element (2) is formed in the area of the surface to be flooded with a three-dimensional surface structuring (11) comprising in particular one or more three-dimensional surface structural elements (10) that are raised compared with the surface to be flooded, wherein the first plastic material layer (3) is formed such that the three-dimensional surface structuring (11) is raised at least in sections compared with this, and the second plastic material layer (4) is formed such that the three-dimensional surface structuring (11), in particular the sections of the three-dimensional surface structuring (11) that are raised compared with the first plastic material layer (3), is fully embedded in the second plastic material layer (4), wherein
as first floodable plastic material (7) a non-translucent or non-transparent plastic material is used and as second floodable plastic material (8) a translucent or transparent plastic material is used,
**characterised in that** a floodable polyurethane or polyurea material is used as first floodable plastic material (7) and as second floodable plastic material (8), wherein due to the residual curing capacity or residual hardening capacity of the first floodable plastic material still existing on flooding of the first plastic material layer (3) with the second floodable plastic material, a substance-to-substance connection is formed between the first plastic material layer (3) and the second plastic material layer (4).

2. Method according to claim 1, **characterised in that** the carrier element (2) is formed by injection moulding of an injectable, in particular duro- or thermoplastic, plastic material.

3. Method according to claim 1 or 2, **characterised in that** the carrier element (2) is formed with a sealing structure (9) that is raised in particular with regard to the surface to be flooded of the carrier element (2) and which encloses in a restrictive manner at least the surface of the carrier element (2) to be flooded with the first floodable plastic material (7).

4. Method according to any one of the preceding claims, **characterised in that** the carrier element (2) is connected, in particular in the area of its surface lying opposite the surface to be flooded or that is flooded, to at least one decorative and/or functional layer.

5. Plastic component (1), **characterised in that** it is produced according to a method according to any one of the preceding claims.

## Revendications

1. Procédé de fabrication d'un composant en matière plastique (1), lequel comprend un élément de support (2) et plusieurs couches de matériau en matière plastique (3, 4) disposées ou réalisées dessus, comprenant les étapes :
- de réalisation d'un élément de support (2) du composant en matière plastique (1) à fabriquer à partir d'un matériau en matière plastique ou fournir un élément de support (2) de ce type ;
- de réalisation d'une première couche de matériau en matière plastique (3) recouvrant au moins par endroits une surface dégagée de l'élément de support (2) en inondant au moins par endroits la surface dégagée de l'élément de support (2) avec un premier matériau en matière plastique (7) pouvant être inondé ;
- de réalisation d'une deuxième couche de matériau en matière plastique (4) recouvrant au moins en partie une surface dégagée de la première couche de matériau en matière plastique (3) en inondant au moins par endroits la surface dégagée de la première couche de matériau en matière plastique (3) avec un deuxième matériau en matière plastique (8) pouvant être inondé, dans lequel l'élément de support (2) est réalisé dans la zone de la surface à inonder avec une structuration de surface tridimensionnelle (11) comprenant en particulier un ou plusieurs éléments de structure de surface (10) tridimensionnels en relief par rapport à la surface à inonder, dans lequel la première couche de matériau en matière plastique (3) est réalisée de telle manière que la structuration de surface (11) tridimensionnelle est au moins par endroits en relief par rapport à celle-ci, et la deuxième couche de matériau en matière plastique (4) est réalisée de telle manière que la structuration de surface tridimensionnelle (11), en particulier les sections en relief par rapport à la première couche de matériau en matière plastique (3), de la structuration de surface tridimensionnelle (11) est totalement intégrée dans la deuxième couche de matériau en matière plastique (4), dans lequel
un matériau en matière plastique non translucide ou non transparent est utilisé en tant que premier matériau en matière plastique (7) pouvant être inondé et un matériau en matière plastique translucide ou transparent est utilisé en tant que deuxième matériau en matière plastique (8) pouvant être inondé,
**caractérisé en ce que** un matériau à base de polyuréthane ou de polyurée est utilisé en tant que premier matériau en matière plastique (7) pouvant être inondé et en tant que deuxième matériau en matière plastique (8) pouvant être inondé, dans lequel une liaison à liaison de matière entre la première couche de matériau en matière plastique (3) et la deuxième couche de matériau en matière plastique (4) est réalisée en raison de la capacité de durcissement résiduelle encore de mise lorsque la première couche de matériau en matière plastique (3) est submergée avec le deuxième matériau en matière plastique pouvant être inondé.

2. Procédé selon la revendication 1, **caractérisé en ce que** l'élément de support (2) est réalisé par un moulage par injection d'un matériau en matière plastique pouvant être moulé par injection, en particulier thermodurcissable ou thermoplastique.

3. Procédé selon la revendication 1 ou 2, **caractérisé en ce que** l'élément de support (2) est réalisé avec une structure d'étanchéité (9) en particulier en relief par rapport à la surface à inonder de l'élément de support (2), laquelle entoure de manière à limiter au moins la surface, à inonder avec le premier matériau en matière plastique (7) pouvant être inondé, de l'élément de support (2).

4. Procédé selon l'une quelconque des revendications précédentes, **caractérisé en ce que** l'élément de support (2) est relié, en particulier dans la zone de sa surface faisant face à la surface à inonder ou inondée, à au moins une couche décorative et/ou fonctionnelle.

5. Composant en matière plastique (1), **caractérisé en ce qu'**il est fabriqué selon un procédé selon l'une quelconque des revendications précédentes.
